# EUROPÄISCHE PATENTANMELDUNG

(11) **EP 0 922 853 A1**
(43) Veröffentlichungstag der Anmeldung: **16.06.1999**
(21) Anmeldenummer: 98120371.4
(22) Anmeldetag: 28.10.1998
(51) Int. Cl.: F02M 65/00, F01L 1/46, G01B 7/00, G01B 7/02, G01B 5/00

(54) **Messeinrichtung zum messen eines Hubs eines Ventilglieds**

(30) Priorität: 21.11.1997 DE 19751661
(71) Anmelder: DaimlerChrysler AG, 70567 Stuttgart (DE)
(72) Erfinder: Allmendinger, Klaus, 89429 Bachhagel (DE); Scherer, Matthias, 73730 Esslingen (DE)

(57) **Zusammenfassung**

Die Erfindung betrifft eine Meßeinrichtung zum Messen eines Hubs eines Ventilglieds mit einem ersten feststehenden, zylindrischen, kapazitiven Aufnehmer und einem zweiten beweglichen, zylindrischen kapazitiven Aufnehmer, der mit dem Ventilglied verbunden und zum ersten Aufnehmer koaxial angeordnet ist und während der Bewegung des Ventilglieds sich mehr oder weniger mit dem ersten Aufnehmer überdeckt.

Es wird vorgeschlagen, daß in der axialen Verlängerung des ersten Aufnehmers oder des zweiten ein dritter Aufnehmer angeordnet ist, der während des gesamten Hubs des Ventilglieds vom radial versetzt angeordneten zweiten Aufnehmer bzw. vom ersten überdeckt ist.

## Beschreibung

Die Erfindung betrifft eine Meßeinrichtung zum Messen eines Hubs eines Ventilglieds nach dem Oberbegriff von Anspruch 1.

Eine variable Steuerung von Gaswechselventilen kann den Wirkungsgrad und das Emissionsverhalten von Schadstoffen bei Brennkraftmaschinen wesentlich verbessern. Hierzu dienen elektromagnetische Aktuatoren zum Betätigen der Gaswechselventile oder andere elektrisch ansteuerbare Stellvorrichtungen, die in weiten Grenzen eine variable Steuerung zulassen. Um den Ventilöffnungsverlauf den Erfordernissen des Ladungswechsels anzupassen und den Verschleiß und Energieverbrauch zu minimieren, ist eine zusätzliche Flugbahnregelung des Ventilglieds erforderlich. Als Basisgröße der Flugbahnregelung dient ein Positionssignal, das die Lage des Ventilglieds zu jedem Zeitpunkt wiedergibt.

Neben dem Gaswechsel ist für den Wirkungsgrad und das Emissionsverhalten von Schadstoffen bei Brennkraftmaschinen die Kraftstoffzufuhr von Bedeutung, und zwar sowohl in bezug auf die Kraftstoffmenge als auch auf den Einspritzzeitpunkt. Somit ist ebenfalls wichtig, den Bewegungsverlauf eines Ventilglieds der Kraftstoffeinspritzvorrichtung zu regeln, z.B. einer entsprechenden Injektornadel. Auch hierbei wird zweckmäßigerweise ein Positionssignal zur Regelung herangezogen.

Aus der DE 44 38 059 A1 ist eine Einrichtung zur meßtechnischen Erfassung von Hubbewegungen von Ventilen, z.B. eines Gaswechselventils oder eines Kraftstoffeinspritzventils, für Brennkraftmaschinen bekannt, bei denen an den Ventilen Magnetkreise angeordnet sind, von denen jeder eine gegenüber dem Ventil ortsfeste magnetfelderzeugende Spule und einen an den Bewegungen des Ventils teilnehmenden und dabei den Magnetkreis beeinflussenden Magnetkern enthält. Werden die Spulen mit Wechselstrom gespeist, wird die durch die Bewegungen des Magnetkerns hervorgerufene Impedanzänderung im Magnetkreis als Maß für den Hubverlauf des betreffenden Ventils erfaßt. Werden die Spulen mit Gleichstrom gespeist, dient die durch Bewegungen des Magnetkerns induzierte Spannung in den Spulen als Maß für die Geschwindigkeit der Hubbewegung des betreffenden Ventils. Um den Aufwand gering zu halten, Temperatureinflüsse zu kompensieren, werden die magnetfelderzeugenden Spulen zweier, zu unterschiedlichen Zeiten betätigter Ventile in entgegengesetzt wirkende Zweige einer Brückenschaltung geschaltet. Induktive Meßverfahren sind allerdings aufgrund der auftretenden Hystereseeffekte nur begrenzt tauglich.

Aus der DE 43 26 379 A1 ist eine Meßvorrichtung zur Messung des Hubes von federbelasteten Ventilen von Brennkraftmaschinen mit einem kapazitiven Wegaufnehmer bekannt, der einen gehäusefesten und einen ventilfesten Aufnehmerteil aufweist. Die beiden Aufnehmerteile sind innerhalb des durch die Ventilfeder begrenzten Federraums konzentrisch um den Ventilschaft angeordnet. Der gehäusefeste und ventilfeste Aufnehmerteil bilden einen hubabhängigen Meßkondensator, wobei die Überdeckung der Aufnehmerteile durch die Kapitzitätsänderung ein vom Ventilhub abhängiges Meßsignal liefert. Eine Kompensation von Temperatureinflüssen ist nicht vorgesehen.

Aus der DE 33 31 170 C1 ist eine Vorrichtung zur Wegbestimmung eines Kolbens von hydraulischen, pneumatischen oder hydropneumatischen Aggregaten wie Schwingungsdämpfern, Gasfedern und hydropneumatischen Federungen nach dem Rohrkondensatorprinzip bekannt, wobei eine erste, axial verschiebbare Elektrode durch die hohle Kolbenstange gebildet wird und eine zweite, isoliert angeordnete Elektrode ortsfest im Zylinder gehalten ist und die Kapazität zwischen beiden Elektroden gemessen wird. Im zylindrischen Innenraum der im Zylinderboden fixierten Elektrode ist ein weiteres, im Abstand fest angeordnetes Rohr vorgesehen, welches als zusätzliche Elektrode mit der fixierten Elektrode einen Kondensator mit fester Kapazität bildet. Dabei erhält man den Vorteil einer kapazitiven Halbbrücke, die sich aus der variablen Kapazität (durch Verschiebung der Kolbenstange) und der festen, im Zylinderboden verankerten Kapazität zusammensetzt. Diese Anordnung ermöglicht neben einer besseren Auswertung der variablen Kapazität auch eine gleichzeitige Druck- und Temperaturkompensation, indem mittels einer geeigneten Elektronik das Verhältnis der beiden Kapazitäten berücksichtigt wird. Eine solche Anordnung ist bei den geringen radialen Abmessungen von Hubventilen bei Brennkraftmaschinen kaum anzuwenden.

Aus der EP 0 336 022 A1 ist ein kapazitives Meßgerät bekannt, bei dem eine mit einem Fühler verbundene Elektrode mit mehreren koaxial angeordneten und axial auf gleichem Durchmesser zueinander versetzt angeordneten Elektroden zusammenwirkt. Von den so gebildeten Kondensatoren hat zumindest einer während des normalen Gebrauchs eine konstante Kapazität, während weitere Kondensatoren ihre Kapazität mit der Verlagerung des Kühlers ändern und ein der Verlagerung des Fühlers entsprechendes Signal erzeugen. In der bevorzugten Ausführung ist eine schmale mittlere Elektrode zwischen zwei gleich großen Endelektroden angeordnet. Die Endelektroden bilden mit einer koaxial angeordneten weiteren Elektrode Kondensatoren mit veränderlicher Kapazität.

Der Erfindung liegt die Aufgabe zugrunde, mit geringem Aufwand und bei kleinem Bauraum ein geeignetes Positionssignal für Hubventile bei Brennkraftmaschinen zu erzeugen. Sie wird gemäß der Erfindung durch die Merkmale des Anspruchs 1 gelöst. Weitere Ausgestaltungen ergeben sich aus den Unteransprüchen.

Nach der Erfindung ist in der axialen Verlängerung des ersten oder zweiten Aufnehmers ein dritter Aufnehmer angeordnet, der zweckmäßigerweise die gleiche Größe aufweist wie der ihm axial zugeordnete Aufnehmer. Von den axial zueinander angeordneten Aufnehmern wird einer während des gesamten Hubs des Ventilglieds vom radial versetzt angeordneten Aufnehmer überdeckt, während der andere Aufnehmer entsprechend der Hubbewegung des Ventilglieds mehr oder weniger überdeckt wird. Der Aufnehmer, der stets vollständig von einem radial versetzten überdeckt wird, bildet mit diesem einen Kondensator mit einer konstanten Kapazität, während der andere Aufnehmer, der von dem radial versetzten Aufnehmer hubabhängig überdeckt wird, einen zweiten Kondensator bildet, dessen Kapazität sich mit der Hubbewegung ändert.

Dadurch, daß zwei Aufnehmer an einem feststehenden oder bewegten Bauteil in einer axialen Verlängerung zueinander angeordnet sind und mit einem radial versetzten, koaxialen Aufnehmer an dem jeweils anderen Bauteil zusammenarbeiten, ergibt sich eine schlanke Meßeinrichtung, die nur wenig radialen Bauraum beansprucht und somit für Ventilglieder bei Brennkraftmaschinen geeignet ist.

Die axiale Länge des Aufnehmers, der den variablen Kondensator bildet, sollte mindestens dem maximalen Ventilhub entsprechen, während die Länge des Aufnehmers, der den konstanten Kondensator bildet, grundsätzlich beliebig lang sein kann, jedoch ist es zweckmäßig, wenn er ungefähr gleich groß ist. Der Aufnehmer, der allein an einem Bauteil angeordnet ist, hat in Bezug auf eine gute Raumausnutzung eine axiale Erstreckung, die der Summe der axialen Längen der beiden anderen Aufnehmer plus dem Abstand zwischen diesen entspricht.

Werden die Kapazitäten der beiden Kondensatoren bei voller Überdeckung der Aufnehmer gleich gewählt, und werden die beiden in Reihe geschalteten Kondensatoren als Spannungsteiler geschaltet, so fällt in der Endlage des Ventilglieds mit voller Überdeckung der Aufnehmer die Hälfte der angelegten Spannung an jedem Kondensator ab. Während einer Lageänderung des Ventilglieds ändert sich der Spannungsabfall nicht linear mit der Position des Ventilglieds und stellt somit ein Maß für die Position des Ventilglieds dar. Das Spannungssignal steht hysteresefrei zur Verfügung. Der Vorteil des Verfahrens liegt ferner darin, daß die Kapazitätsänderung, die sich im pF-Bereich bewegt, nicht mittels aufwendiger Messungen ermittelt wird, sondern über einen kapazitiven Spannungsteiler mit einer konstanten Referenzkapazität bestimmt werden kann. Da diese Referenzkapazität in ihrem Aufbau, der sich in einer Endlage bei vollständiger Überdeckung befindlichen Meßkapazität entspricht, ist gewährleistet, daß beide Kapazitäten in dieser Position des Ventilglieds gleich groß sind, wodurch eine Kalibrierung der Referenzkapazität entfällt. Ferner wirken sich Störungen gleichmäßig auf beide Kondensator gleich aus, so daß Störeinflüsse, insbesondere durch Temperaturschwankungen, kompensiert werden und ein störunempfindliches Meßverhalten erzielt wird.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gaswechselventil mit einer erfindungsgemäßen Meßeinrichtung in schematischer Darstellung, die einer geschlossenen Position des Gaswechselventils entspricht,
- Fig. 2: ein Gaswechselventil entsprechend Fig. 1, jedoch in einer geöffneten Position,
- Fig. 3: eine Schaltung, bei der die Aufnehmer in Reihe geschaltete Kondensatoren bilden, und
- Fig. 4: eine Schaltung, bei der die Kondensatoren zu einem kapazitiven Spannungsteiler geschaltet sind.

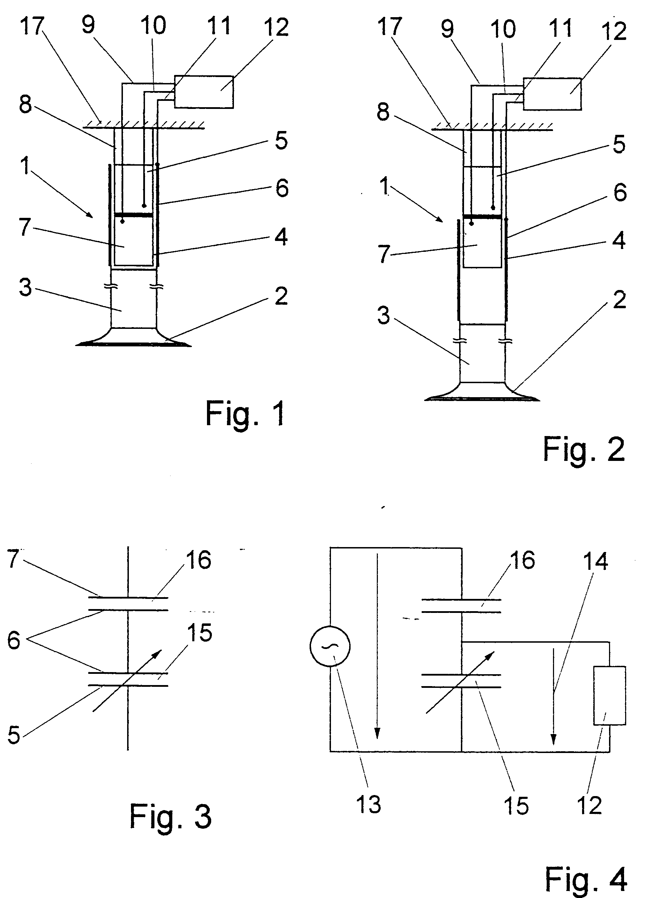

Ein Gaswechselventil besitzt ein Ventilglied mit einem Ventilteller 2 und einem Ventilschaft 3, das über nicht dargestellte Ventilfedern in Schließstellung gehalten wird und über einen ebenfalls nicht dargestellten, elektrischen Betätigungsmechanismus in die geöffnete Position gemäß Fig. 2 verstellt wird.

Um die Hubbewegung des Ventilglieds 2, 3 in Abhängigkeit von Kenngrößen der Brennkraftmaschine oder von Fahrzeuggrößen regeln zu können, besitzt das Ventilglied 2, 3 eine Meßeinrichtung 1, die aus einem zylindrischen Hohlraum 4 im Ventilschaft 3 und einem Zylinder 8 gebildet wird, der an einem Gehäuse 17 befestigt ist.

Der Zylinder 8, der zweckmäßigerweise aus elektrisch nicht leitendem Werkstoff hergestellt ist, weist an seinem Umfang einen ersten, elektrisch leitenden Aufnehmer 5 auf, der zum Gehäuse 17 hin und zu einem dritten, elektrisch leitenden Aufnehmer 7 axial isoliert angeordnet ist. Die Aufnehmer 5 und 7 werden von elektrisch leitenden Schichten gebildet, die im axialen Abstand voneinander auf den Zylinder 8 aufgebracht sind und über Steuerleitungen 9 und 10 mit einer Steuereinheit 12 verbunden sind.

Die Innenfläche des Hohlraums 4 bildet einen zweiten Aufnehmer 6, der über eine Steuerleitung 11 mit der Steuereinheit 12 verbunden ist. Die Steuereinheit 12 enthält eine Spannungsquelle 13, durch die an die Aufnehmer 5 und 7 eine Wechselspannung angelegt wird.

Bei der in Fig. 1 dargestellten, geschlossenen Endlage des Ventilglieds 2, 3 tauchen der erste Aufnehmer 5 und der dritte Aufnehmer 7, die eine gleiche axiale Erstreckung haben, vollständig in den Hohlraum 4 und werden somit vollständig von dem zweiten Aufnehmer 6 überdeckt. Der erste Aufnehmer 5 bildet mit der ihn überdeckenden Fläche des zweiten Aufnehmers 6 einen ersten Kondensator 15, während der dritte Aufnehmer 7 mit der ihn überdeckenden Fläche des zweiten Aufnehmers 6 einen zweiten Kondensator 16 bildet. Die Kondensatoren 15 und 16 sind in Reihe geschaltet (Fig. 3).

Wird das Gaswechselventil geöffnet, wird der erste Aufnehmer 5 vom zweiten Aufnehmer 6 in Abhängigkeit des Hubs weniger überdeckt, bis das Ventilglied die geöffnete Endlage erreicht (Fig. 2). In dieser Lage wird der erste Aufnehmer 5 vom zweiten Aufnehmer 6 gerade nicht mehr überdeckt, während der dritte Aufnehmer 7 vom zweiten Aufnehmer 6 noch vollständig überdeckt wird.

Fig. 4 Zeigt einen kapazitiven Spannungsteiler, bei dem der Spannungsabfall an dem variablen Kondensator 15 als Spannungssignal 14 abgenommen und als hubabhängiges Signal in der Steuereinrichtung 12 für die Regelung des Gaswechselventils ausgewertet wird.

Die Meßeinrichtung 1 kann nicht nur bei Gaswechselventilen von Brennkraftmaschinen verwendet werden, sondern auch für Injektornadeln von Kraftstoffeinspritzvorrichtungen. Hierbei wird die Meßeinrichtung in einem Hohlraum der Injektornadel untergebracht, der dem Hohlraum 4 des dargestellten Gaswechselventils entspricht.

## Patentansprüche

1. Meßeinrichtung zum Messen eines Hubs eines Ventilglieds mit einem ersten feststehenden, zylindrischen, kapazitiven Aufnehmer und einem zweiten beweglichen, Zylindrischen kapazitiven Aufnehmer, der mit dem Ventilglied verbunden und zum ersten Aufnehmer koaxial angeordnet ist und während der Bewegung des Ventilglieds sich mehr oder weniger mit dem ersten Aufnehmer überdeckt,
**dadurch gekennzeichnet,**
daß in der axialen Verlängerung des ersten Aufnehmers (5) oder des zweiten ein dritter Aufnehmer (7) angeordnet ist, der während des gesamten Hubs des Ventilglieds (2, 3) vom radial versetzt angeordneten zweiten Aufnehmer (6) bzw. vom ersten überdeckt ist, wobei das Ventilglied (2, 3) aus einem elektrisch leitenden Material besteht und mit einem feststehenden Zylinder (8) mit einem geringen radialen Spiel zusammenwirkt, der zwei von einander isolierte, axiale Zonen aus elektrisch leitendem Material hat, wobei die Zonen den ersten und dritten Aufnehmer (5, 7) bilden und mit der gegenüberliegenden, einen zweiten Aufnehmer (6) bildenden Fläche des Ventilglieds (2, 3) einen ersten und einen zweiten Kondensator (15, 16) bilden.

2. Meßeinrichtung nach Anspruch 1,
**dadurch gekennzeichnet,**
daß die axial auf gleichem Radius zueinander liegenden Aufnehmer (5, 7) gleich groß sind und in einer Endlage des Ventilglieds (2, 3) von dem zweiten Aufnehmer (6) bzw. ersten vollständig überdeckt sind.

3. Meßeinrichtung nach Anspruch 1 oder 2,
**dadurch gekennzeichnet,**
daß der Zylinder (8) aus elektrisch nicht leitendem Werkstoff besteht, auf dessen äußeren Mantel in den Zonen Schichten aus elektrisch leitendem Material aufgebracht sind.

4. Meßeinrichtung nach einem der vorhergehenden Ansprüche,
**dadurch gekennzeichnet,**
daß die Kondensatoren (15, 16) zu einem Spannungsteiler geschaltet sind und der Spannungsabfall an dem variablen Kondensator (15) als Signal (14) für die Position bzw. den Weg des Ventilglieds (2, 3) einer elektronischen Steuereinheit (12) zugeleitet wird.

5. Meßeinrichtung nach einem der vorhergehenden Ansprüche,
**dadurch gekennzeichnet,**
daß sie bei einer Kraftstoffeinspritzvorrichtung einer Brennkraftmaschine verwendet wird.

6. Meßeinrichtung nach einem der Ansprüche 1 bis 4,
**dadurch gekennzeichnet,**
daß sie bei einem Gaswechselventil einer Brennkraftmaschine verwendet wird.
